# EUROPEAN PATENT SPECIFICATION

(11) **EP 3 764 061 B1**
(45) Date of publication and mention of the grant of the patent: **23.03.2022**
(21) Application number: 20181287.2
(22) Date of filing: 19.06.2020
(51) Int. Cl.: G01C 23/00, G06F 3/0481, G01D 13/02

(54) **SYSTEM AND METHOD FOR ADJUSTING A DYNAMIC SCALE INDICATOR ON A FLIGHT DISPLAY OF AN AIRCRAFT**
SYSTEM UND VERFAHREN ZUR ANPASSUNG EINES DYNAMISCHEN SKALENINDIKATORS AUF EINER FLUGANZEIGE EINES FLUGZEUGS
SYSTÈME ET PROCÉDÉ POUR RÉGLER UN INDICATEUR D'ÉCHELLE DYNAMIQUE SUR UN AFFICHAGE DE VOL D'UN AVION

(30) Priority: 08.07.2019 US 201916504956
(43) Date of publication of application: 13.01.2021
(73) Proprietor: Honeywell International Inc., Morris Plains, NJ 07950 (US)
(72) Inventor: HE, Zuowei, Morris Plains, NJ 07950 (US); FEYEREISEN, Thea, Morris Plains, NJ 07950 (US); HE, Gang, Morris Plains, NJ 07950 (US); HE, Ye, Morris Plains, NJ 07950 (US)
(74) Representative: LKGlobal UK Ltd.

(56) References cited:
- US-A1- 2004 113 816
- US-A1- 2011 001 636
- US-B1- 6 721 634
- US-B1- 6 727 912

## Description

### TECHNICAL FIELD

The present invention generally relates to aircraft operations, and more particularly relates to a system and method for adjusting a dynamic scale indicator on a flight display of an aircraft.

### BACKGROUND

As aircraft avionics increase in sophistication, the primary flight display (PDF) in a cockpit has become more cluttered and less clear to pilots and other aircrew. Though unlikely, such cluttered displays may increase the likelihood of confusion to a pilot and it is postulated that this could potentially result in critical information being missed. Hence, there is a need for decluttering a flight display by adjusting a dynamic scale indicator on the flight display of the aircraft Exemplary flights displays with dynamic scale indicators are described in the documents US 6727912 B1, US 2011/0001636 A1, US2004/0113816 A1.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for adjusting a dynamic scale indicator on a flight display of an aircraft. The method comprises: receiving an operational status parameter for the aircraft from an avionics unit located onboard the aircraft; generating the dynamic scale indicator that is located on the flight display of the aircraft, where the dynamic scale indicator includes a positive value range that represents operational status parameter values greater than zero and a negative value range that represents operational status parameter values less than zero; translating the operational status parameter into a value that is represented on the dynamic scale indicator; adjusting the value ranges shown on the dynamic scale indicator by, fading the value range below the selected setting value from the dynamic scale indicator when the operational status parameter value is above the selected setting value, fading the value range above the selected setting value from the dynamic scale indicator when the operational status parameter value is below the selected setting value, and fading the value range from the dynamic scale indicator to the extent that the value range exceeds the operational status parameter value; and displaying the dynamic scale indicator with the adjusted value ranges on the display.

A system is provided for adjusting a dynamic scale indicator on a flight display of an aircraft. The system comprises: a sensor configured to determine a vertical speed of the aircraft; a display; and a processor communicatively coupled to the sensor and the display, the processor configured to: generate a dynamic vertical speed indicator, the dynamic vertical speed indicator comprising a current vertical speed indicator, a positive scale positioned above the current vertical speed indicator, and a negative scale positioned below the current vertical speed indicator; modify the generated dynamic vertical speed indicator by fading the negative scale from the dynamic vertical speed indicator when the determined vertical speed of the aircraft is positive; modify the generated dynamic vertical speed indicator by fading at least a part of the positive scale which is higher than the determine vertical speed of the aircraft when the determine vertical speed of the aircraft is positive and below a predetermined threshold; modify the generated dynamic vertical speed indicator by fading the positive scale from the dynamic vertical speed indicator when the determined vertical speed of the aircraft is negative; modify the generated dynamic vertical speed indicator by fading at least a part of the negative scale which is lower than the determine vertical speed of the aircraft when the determined vertical speed of the aircraft is negative and above a predetermined threshold; and output the modified dynamic vertical speed indicator to the display.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of an in-flight aircraft that contains an onboard flight management system (FMS) along with a visual data system in accordance with one embodiment;
FIG.2 shows a block diagram of a flight management computer (FMC) (or flight management system (FMS)) onboard an aircraft utilized to communicate data between existing onboard avionics systems or line-replaceable units (LRUs) in accordance with one embodiment;
FIGS. 3A-3C show diagrams of a dynamic scale indicator with a positive value range in accordance with one embodiment;
FIGS. 4A-4C show diagrams of a dynamic scale indicator with a negative value range in accordance with one embodiment;
FIGS. 5A-5D show diagrams of a dynamic scale indicator with negative and positive value ranges in accordance with one embodiment; and
FIG. 6 shows a flow chart of a method for adjusting a dynamic scale indicator on a flight display of an aircraft in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality. The provided system and method may be separate from, or integrated within, a preexisting mobile platform management system, avionics system, or aircraft flight management system (FMS).

A method and system for adjusting a dynamic scale indicator on a primary flight display (PFD) of an aircraft has been developed. First, operational status parameters for the aircraft are received from an avionics unit located on board the aircraft. A dynamic scale indicator that is located on the PFD is generated with a positive value range that represents operational status parameter values greater than a selected setting value and a value range that represents operational status parameter values less than the selected setting value. The operational status parameters are translated into a value that is represented on the dynamic scale indicator. The value ranges on the dynamic scale indicator is adjusted by fading the negative value range when the operational status parameter value is positive and by fading the positive value range when the operational status parameter value is negative. Additionally, the value range of the dynamic scale indicator is faded to the extent that the value range exceeds the operational status parameter value. The dynamic scale indicator with the adjusted value ranges is then displayed on the PFD.

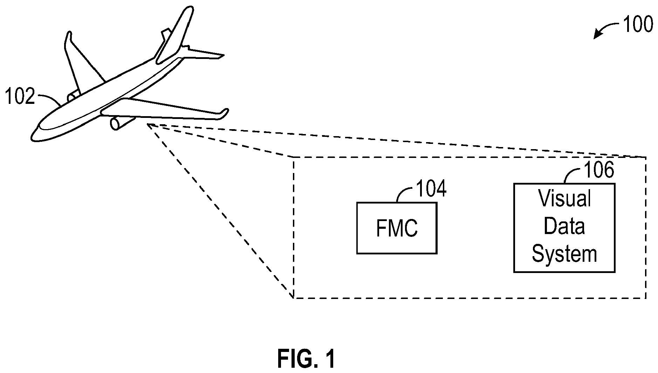

Turning now to FIG. 1, a diagram 100 is shown of an in-flight aircraft 102 that contains an onboard FMS 104 along with a visual data system 106 that is accessed by the FMS 104 in accordance with one embodiment. The FMS 104, as is generally known, is a specialized computer that automates a variety of in-flight tasks such as in-flight management of the flight plan. Using various sensors such as global positioning system (GPS), the FMS 104 determines the aircraft's position and guides the aircraft along its flight plan. From the cockpit, the FMS 104 is normally controlled through a device that is part of the visual display system 106 such as a control display unit (CDU) which incorporates a small screen, a keyboard or a touchscreen. The FMS 104 displays the flight plan and other critical flight data to the aircrew during operation.

The FMS 104 may have a built-in electronic memory system that contains a navigation database. The navigation database contains elements used for constructing a flight plan. In some embodiments, the navigation database may be separate from the FMS 104 and located onboard the aircraft while in other embodiments the navigation database may be located on the ground and relevant data provided to the FMS 104 via a communications link with a ground station. The navigation database used by the FMS 104 may typically include: waypoints/intersections; airways; radio navigation aids/navigation beacons; airports; runway; standard instrument departure (SID) information; standard terminal arrival (STAR) information; holding patterns; and instrument approach procedures. Additionally, other waypoints may also be manually defined by pilots along the route.

The flight plan is generally determined on the ground before departure by either the pilot or a dispatcher for the crew of the aircraft. It may be manually entered into the FMS 104 or selected from a library of common routes. In other embodiments the flight plan may be loaded via a communications data link from an airline dispatch center. During preflight planning, additional relevant aircraft performance data may be entered including information such as: gross aircraft weight; fuel weight and the center of gravity of the aircraft. The aircrew may use the FMS 104 to modify the plight flight plan before takeoff or even while in flight for variety of reasons. Such changes may be entered via the MCDU or other interface device. Once in flight, the principal task of the FMS 104 is to accurately monitor the aircraft's position and guide the aircraft along the intended route of flight. This may use a GPS, a VHF omnidirectional range (VOR) system, or other similar sensor in order to determine and validate the aircraft's exact position. The FMS 104 constantly cross checks among various sensors to determine the aircraft's position with accuracy. In alternative embodiments, other types of electronic navigation systems may be used in place of the FMS.

In exemplary embodiments, an existing flight management computer (FMC) (or flight management system (FMS)) onboard an aircraft is utilized to communicate data between existing onboard avionics systems or line-replaceable units (LRUs) and another module coupled to the FMC, which supports or otherwise performs new flight management functionality that is not performed by the FMC. For example, a multifunction control and display unit (MCDU) may support or otherwise perform new flight management functionality based on data from onboard avionics or LRUs received via the FMC. In this regard, the FMC is configured to receive operational or status data from one or more avionics systems or LRUs onboard the aircraft at corresponding avionics interfaces and convert one or more characteristics of the operational data to support communicating the operational data with the MCDU. For purposes of explanation, the subject matter may primarily be described herein in the context of converting operational data received from onboard avionics or LRUs in a first format (e.g., an avionics bus format) into another format supported by the interface with the MCDU, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

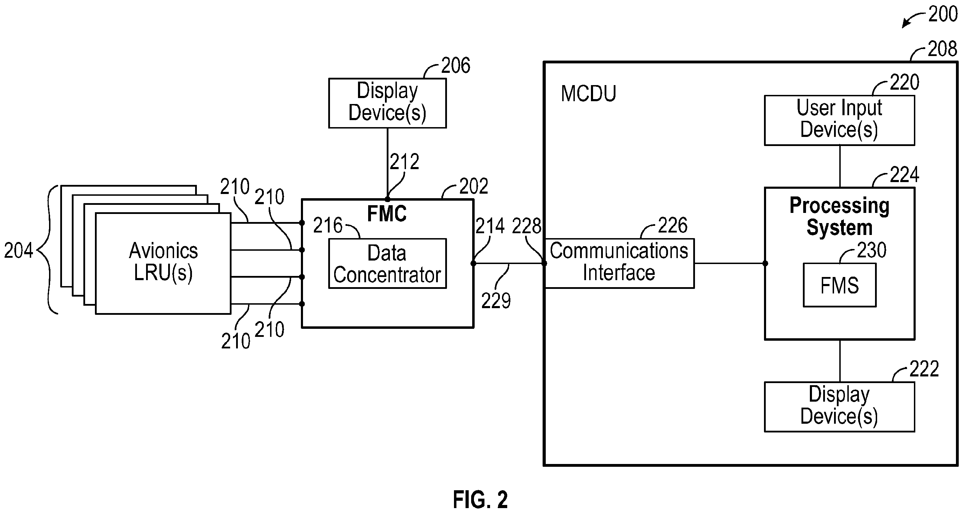

Turning now to FIG. 2, depicted therein is an exemplary embodiment of an aircraft system 200 suitable for implementation onboard an aircraft. The illustrated aircraft system 200 includes a flight management computing (FMC) module 202 (shown previously as 104 in Fig. 1) communicatively coupled to a plurality of onboard avionics LRUs 204, one or more display devices 206, and a multifunction computing module 208. It should be appreciated that FIG. 2 depicts a simplified representation of the aircraft system 200 for purposes of explanation, and FIG. 2 is not intended to limit the subject matter in any way.

The flight management computing module 202 generally represents the FMC, the FMS, or other hardware, circuitry, logic, firmware and/or other components installed onboard the aircraft and configured to perform various tasks, functions and/or operations pertaining to flight management, flight planning, flight guidance, flight envelope protection, fourdimensional trajectory generation or required time of arrival (RTA) management, and the like. Accordingly, for purposes of explanation, but without limiting the functionality performed by or supported at the flight management computing module 202, the flight management computing module 202 may alternatively be referred to herein as the FMC. The FMC 202 includes a plurality of interfaces 210 configured to support communications with the avionics LRUs 204 along with one or more display interfaces 212 configured to support coupling one or more display devices 206 to the FMC 202. In the illustrated embodiment, the FMC 202 also includes a communications interface 214 that supports coupling the multifunction computing module 208 to the FMC 202.

The FMC 202 generally includes a processing system designed to perform flight management functions, and potentially other functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMC 202 generally includes or otherwise accesses a data storage element (or memory), which may be realized as any sort of non-transitory short or long term storage media capable of storing programming instructions for execution by the processing system of the FMC 202. In exemplary embodiments, the data storage element stores or otherwise maintains code or other computer-executable programming instructions that, when read and executed by the processing system of the FMC 202, cause the FMC 202 to implement, generate, or otherwise support a data concentrator application 216 that performs certain tasks, operations, functions, and processes described herein.

The avionics LRUs 204 generally represent the electronic components or modules installed onboard the aircraft that support navigation, flight planning, and other aircraft control functions in a conventional manner and/or provide real-time data and/or information regarding the operational status of the aircraft to the FMC 202. For example, practical embodiments of the aircraft system 200 will likely include one or more of the following avionics LRUs 204 suitably configured to support operation of the aircraft: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, altitude, fuel and/or another suitable avionics system.

In exemplary embodiments, the avionics interfaces 210 are realized as different ports, terminals, channels, connectors, or the like associated with the FMC 202 that are connected to different avionics LRUs 204 via different wiring, cabling, buses, or the like. In this regard, the interfaces 210 may be configured to support different communications protocols or different data formats corresponding to the respective type of avionics LRU 204 that is connected to a particular interface 210. For example, the FMC 202 may communicate navigation data from a navigation system via a navigation interface 210 coupled to a data bus supporting the ARINC 424 (or A424) standard, the ARINC 629 (or A629) standard, the ARINC 422 (or A422) standard, or the like. As another example, a datalink system or other communications LRU 204 may utilize an ARINC 619 (or A619) compatible avionics bus interface for communicating datalink communications or other communications data with the FMC 202.

The display device(s) 206 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMC 202 via the display interface(s) 212. Similar to the avionics interfaces 210, the display interfaces 212 are realized as different ports, terminals, channels, connectors, or the like associated with the FMC 202 that are connected to different cockpit displays 206 via corresponding wiring, cabling, buses, or the like. In one or more embodiments, the display interfaces 212 are configured to support communications in accordance with the ARINC 661 (or A661) standard. In one embodiment, the FMC 202 communicates with a lateral map display device 206 using the ARINC 702 (or A702) standard.

In exemplary embodiments, the multifunction computing module 208 is realized as a multifunction control and display unit (MCDU) that includes one or more user interfaces, such as one or more input devices 220 and/or one or more display devices 222, a processing system 224, and a communications module 226. The MCDU 208 generally includes at least one user input device 220 that is coupled to the processing system 224 and capable of receiving inputs from a user, such as, for example, a keyboard, a key pad, a mouse, a joystick, a directional pad, a touchscreen, a touch panel, a motion sensor, or any other suitable user input device or combinations thereof. The display device(s) 222 may be realized as any sort of monitor, screen, LCD, LED display, or other suitable electronic display capable of graphically displaying data and/or information under control of the processing system 224.

The processing system 224 generally represents the hardware, circuitry, logic, firmware and/or other components of the MCDU 208 configured to perform the various tasks, operations, functions and/or operations described herein. Depending on the embodiment, the processing system 224 may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system 224, or in any practical combination thereof. In this regard, the processing system 224 includes or accesses a data storage element (or memory), which may be realized using any sort of non-transitory short or long term storage media, and which is capable of storing code or other programming instructions for execution by the processing system 224. In exemplary embodiments described herein, the code or other computer-executable programming instructions, when read and executed by the processing system 224, cause the processing system 224 to implement or otherwise generate an application for the FMS 230 and perform additional tasks, operations, functions, and processes described herein.

The communications module 226 generally represents the hardware, module, circuitry, software, firmware and/or combination thereof that is coupled between the processing system 224 and a communications interface 228 of the MCDU 208 and configured to support communications between the MCDU 208 and the FMC 202 via an electrical connection 229 between the MCDU communications interface 228 and the FMC communications interface 214. For example, in one embodiment, the communications module 226 is realized as an Ethernet card or adapter configured to support communications between the FMC 202 and the MCDU 208 via an Ethernet cable 229 provided between Ethernet ports 214, 228. In other embodiments, the communications module 226 is configured to support communications between the FMC 202 and the MCDU 208 in accordance with the ARINC 429 (A429) standard via an A429 data bus 229 provided between A429 ports 214, 228 of the respective modules 202, 208. In yet other embodiments, the communications module 226 is configured to support communications between the FMC 202 and the MCDU 208 in accordance with the ARINC 422 (A422) standard via an A422 data bus 229 provided between A422 ports 214, 228 of the respective modules 202, 208. In yet other embodiments, the communications module 226 is configured to support communications between the FMC 202 and the MCDU 208 in accordance with the ARINC 739 (A739) standard via an A739 data bus 229 provided between A739 ports 214, 228 of the respective modules 202, 208.

In various embodiments, the FMC 202 and MCDU 208 communicate using a different communications protocol or standard than one or more of the avionics LRUs 204 and/or the display devices 206. In such embodiments, to support communications of data between the MCDU 208 and those LRUs 204 and/or display devices 206, the data concentrator application 216 at the FMC 202 converts data from one format to another before retransmitting or relaying that data to its destination. For example, the data concentrator application 216 may convert data received from an avionics LRU 204 to the A429 or Ethernet format before providing the data to the MCDU 208, and vice versa. Additionally, in exemplary embodiments, the FMC 202 validates the data received from an avionics LRU 204 before transmitting the data to the MCDU 208. For example, the FMC 202 may perform debouncing, filtering, and range checking, and/or the like prior to converting and retransmitting data from an avionics LRU 204.

It should be noted that although the subject matter may be described herein in the context of the multifunction computing module 208 being realized as an MCDU, in alternative embodiments, the multifunction computing module 208 could be realized as an electronic flight bag (EFB) or other mobile or portable electronic device. In such embodiments, an EFB capable of supporting an FMS application 230 may be connected to a onboard FMC 202 using an Ethernet cable 229 to support flight management functionality from the EFB in an equivalent manner as described herein in the context of the MCDU.

In one or more embodiments, the MCDU 208 stores or otherwise maintains programming instructions, code, or other data for programming the FMC 202 and transmits or otherwise provides the programming instructions to the FMC 202 to update or otherwise modify the FMC 202 to implement the data concentrator application 216. For example, in some embodiments, upon establishment of the connection 229 between modules 202, 208, the MCDU 208 may automatically interact with the FMC 202 and transmit or otherwise provide the programming instructions to the FMC 202, which, in turn, executes the instructions to implement the data concentrator application 216. In some embodiments, the data concentrator application 216 may be implemented in lieu of flight management functionality by the MCDU 208 reprogramming the FMC 202. In other embodiments, the FMC 202 may support the data concentrator application 216 in parallel with flight management functions. In this regard, the FMC 202 may perform flight management functions, while the FMS application 230 on the MCDU 208 supplements the flight management functions to provide upgraded flight management functionality within the aircraft system 200.

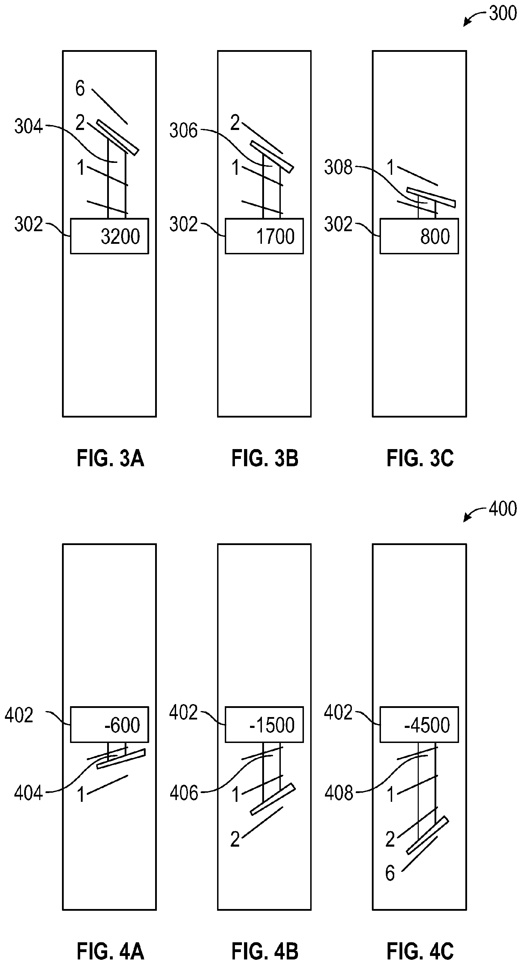

Turning now to FIGS 3A-3C, diagrams 300 are shown of dynamic scale indicators 304, 306 and 308 with a positive value range with respective to a selected setting value of zero. These dynamic scale indicators 304, 306 and 308 are shown on the display devices 222 previously described with respect to FIG. 2. Each dynamic scale indicator 304, 306 and 308 includes a digital readout box 302 that shows the numerical value of the operational status parameter that is reflected on the dynamic scale indicator 304, 306 and 308. This numerical value is reflected as a reading within a dynamic value range. In FIG. 3A for example, the digital readout box 302 shows a value of 3200 and this value is reflected on the scale indicator 304 that has a value range between 0 and 6000. As the value shown in the readout box 302 drops to 1700, as shown in FIG. 3B, the reading on the dynamic scale indicator 306 drops as well. Additionally, the value range for the scale indicator 306 above 2000 fades from the scale indicator since it is considered "excessive" and it is no longer needed. In FIG. 3C, the readout box 302 drops even further to 800 and the corresponding reading on the scale indicator 308 drops as well. The value range of the scale indicator above 1000 fades because it is no longer needed. Additionally, it is important to note that the negative value ranges in each of the dynamic scale indicators 304, 306 and 308 are faded since they are not needed to show any of these positive values of operational status parameters.

Turning now to FIGS. 4A-4C, diagrams 400 are shown of dynamic scale indicators 404, 406 and 408 with a negative value range. These dynamic scale indicators 404, 406 and 408 are shown on the display devices 222 previously described with respect to FIG. 2. As shown previously in FIGS. 3A-3C, a digital readout box 402 is included that shows the numerical value of the operational status parameter. This numerical value is also reflected within the scale range. In contrast to FIGS. 3A-3C, the values of the operational status parameters are negative with respective to a selected setting value of zero, but the same general principles of operation will apply. In FIG. 4A for example, the readout box 402 shows a value of -600. This value is reflected on the dynamic scale indicator 404 with a value range shown between 0 and -1000. In FIG. 4B, the readout box 402 has a value that has decreased to -1500 that is reflected on the dynamic scale indicator 406. The value range that is shown has increased from 0- (-2000) on the scale indicator. In FIG. 4C, the value in the readout box 402 has further decreased to -4500 and the corresponding value range shown has increased from 0-(-6000) on the scale indicator 408. It is important to note in these examples, that the positive value ranges in each of the dynamic scale indicators 404, 406 and 408 are faded since they are not needed to show any of these negative values of operational status parameters.

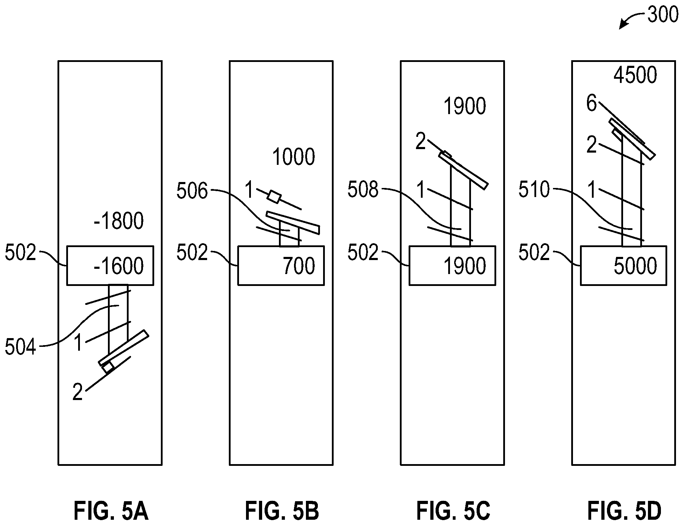

Turning now to FIGS. 5A-5D, diagrams 500 are shown of dynamic scale indicators 504, 506, 508 and 510 with a combination of negative and positive value ranges. These dynamic scale indicators 504, 506, 508 and 510 are shown on the display devices 222 previously described with respect to FIG. 2. As shown previously in FIGS. 3A-3C and 4A-4C, a digital readout box 502 is included that shows the numerical value of the operational status parameter. This numerical value is also reflected within the scale range. In contrast to FIGS. 3A-3C and 4A-4C, the values of the operational status parameters move from negative to positive but the same general principles of operation will apply. In FIG. 5A, the readout box 502 shows a value of -1600 while the value range of the scale indicator uses a range of 0 - (-2000) while the positive value range faded. In FIG. 5B, the readout box 502 shows that the value has increased to 700 resulting in a value range of the scale indicator being shown as 0 - 1000 while the negative value range has faded. In FIG. 5C, the value in the readout box 502 has further increased to 1900 along with a corresponding increase in the value range of the scale indicator from 0 - 2000. Finally, in FIG. 5D, the value in the readout box 502 has increased to 5000 and the corresponding value range of the scale indicator 510 has increased from 0 - 6000. As with the previous examples, when the value of the operational parameter moves, the unneeded value range of the scale indicator with fade.

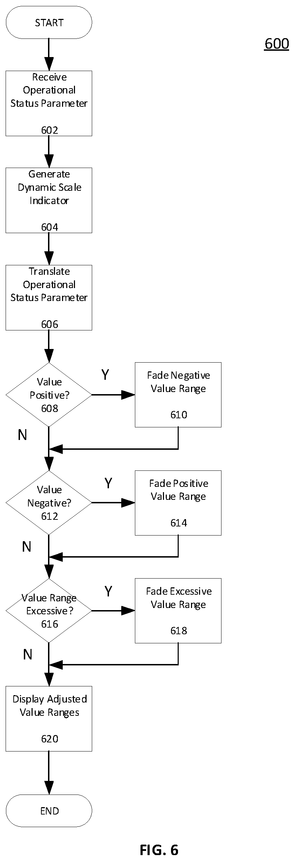

Turning now to FIG. 6, a flowchart 600 is shown of a method for adjusting a dynamic scale indicator on a display of an aircraft in accordance with one embodiment. First, and operational status parameter is received for the aircraft from an avionics unit 602. A dynamic scale indicator is generated that is located on a display of the aircraft 604. The dynamic scale indicator includes a positive value range that represents operational status parameter values greater than zero and a negative value range that represents operational status parameter values less than zero. The operational status parameter is translated into a value that is represented on the dynamic scale indicator 606. If the value is positive 608, the value range shown on the dynamic scale indicator is adjusted by fading the negative value range 610. If the value is negative 612, the value range shown on the dynamic scale indicator is adjusted by fading the positive value range 614. If the value range exceeds the value by an excessive amount 616, the value range shown on the dynamic scale indicator is adjusted by fading the value range to the extent it exceeds the operational status parameter value 618. Finally, the dynamic scale indicator with the adjusted value ranges is displayed on the display 620.

In some embodiments, the dynamic scale indicator is intended to be used on a heads-up display (HUD). A HUD display typically requires display formats with a minimum overall luminescence to optimize see-through operations for a pilot. In other embodiments, the dynamic scale indicator may be used on a heads-down display (HDD). On an HDD, the display elements will maintain an emphasis on a clear and distinct current value readout that will make recognition easier for a pilot. Either the HUD or HDD could be part of a primary flight display (PFD) of the aircraft. In the examples shown previously, the scale range shown is non-linear, especially on the higher values. However, other embodiments could use a linear value range.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computerexecuted, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, additional intervening elements, devices, features, or components may be present in an embodiment of the depicted subject matter.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", "side", "outboard", and "inboard" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

## Claims

1. A method for adjusting a dynamic scale indicator on a flight display of an aircraft, comprising:
receiving (602) an operational status parameter for the aircraft from an avionics unit located onboard the aircraft;
generating (604) the dynamic scale indicator that is located on the flight display of the aircraft, where the dynamic scale indicator includes a value range that represents operational status parameter values greater than a selected setting value and a value range that represents operational status parameter values less the selected setting value;
translating (606) the operational status parameter into a value that is represented on the dynamic scale indicator;
**characterised in that** the method further comprises adjusting the value ranges shown on the dynamic scale indicator by:
fading (610) the value range below the selected setting value from the dynamic scale indicator when the operational status parameter value is above the selected setting value, fading (614) the value range above the selected setting value from the dynamic scale indicator when the operational status parameter value is below the selected setting value, and fading (618) the value range from the dynamic scale indicator to the extent
that the value range exceeds the operational status parameter value; and displaying (620) the dynamic scale indicator with the adjusted value ranges on the display.

2. The method of Claim 1, further comprising:
continuously monitoring the operational status parameter for changes in the translated value represented on the dynamic scale indicator; and
dynamically adjusting the value ranges shown on the dynamic scale indicator to reflect the changes in the operational status parameter.

3. The method of Claim 1, where value ranges of the dynamic scale indicator are a non-linear scale.

4. The method of Claim 1, where the display comprises a primary flight display (PFD).

5. The method of Claim 1, where the display comprises a heads-up display (HUD).

6. The method of Claim 1, where the display comprises a heads-down display (HDD).

7. The method of Claim 1, where the operational status parameter comprises vertical aircraft speed.

8. The method of Claim 1, where the operational status parameter comprises aircraft thrust.

9. The method of Claim 1, where the operational status parameter comprises aircraft trim attitude.

10. The method of Claim 1, where the operational status parameter comprises aircraft fuel level.

11. The method of Claim 1, where the operational status parameter comprises aircraft altitude.

## Patentansprüche

1. Verfahren zur Anpassung eines dynamischen Skalenindikators auf einer Fluganzeige eines Luftfahrzeugs, umfassend:
Empfangen (602) eines Betriebszustandsparameters für das Luftfahrzeug von einer Avionikeinheit, die sich an Bord des Luftfahrzeugs befindet;
Erzeugen (604) des dynamischen Skalenindikators, der sich auf der Fluganzeige des Luftfahrzeugs befindet, wobei der dynamische Skalenindikator einen Wertbereich einschließt, der Betriebszustandsparameterwerte darstellt, die größer sind als ein ausgewählter Einstellwert, und einen Wertbereich, der Betriebszustandsparameterwerte darstellt, die kleiner als der ausgewählte Einstellwert sind;
Übersetzen (606) des Betriebszustandsparameters in einen Wert, der auf dem dynamischen Skalenindikator dargestellt wird;
**dadurch gekennzeichnet, dass** das Verfahren weiter das Anpassen der Wertbereiche, die auf dem dynamischen Skalenindikator gezeigt sind, umfasst durch:
Fading (610) des Wertbereichs unter den ausgewählten Einstellwert von dem dynamischen Skalenindikator, wenn der Betriebszustandsparameterwert über dem ausgewählten Einstellwert liegt,
Fading (614) des Wertbereichs über den ausgewählten Einstellwert von dem dynamischen Skalenindikator, wenn der Betriebszustandsparameterwert unter dem ausgewählten Einstellwert liegt, und
Fading (618) des Wertbereichs von dem dynamischen Skalenindikator in dem Ausmaß, in dem der Wertbereich den Betriebszustandsparameterwert überschreitet; und
Anzeigen (620) des dynamischen Skalenindikators mit den angepassten Wertbereichen auf der Anzeige.

2. Verfahren nach Anspruch 1, das weiter umfasst:
kontinuierliches Überwachen des Betriebszustandsparameters auf Änderungen des übersetzten Werts, die auf dem dynamischen Skalenindikator dargestellt werden; und
dynamisches Anpassen der Wertbereiche, die auf dem dynamischen Skalenindikator gezeigt sind, um Änderungen des Betriebszustandsparameters wiederzugeben.

3. Verfahren nach Anspruch 1, wobei Wertbereiche des dynamischen Skalenindikators eine nichtlineare Skala sind.

4. Verfahren nach Anspruch 1, wobei die Anzeige eine Primärfluganzeige (PFD) umfasst.

5. Verfahren nach Anspruch 1, wobei die Anzeige eine Heads-Up-Anzeige (HUD) umfasst.

6. Verfahren nach Anspruch 1, wobei die Anzeige eine Heads-Down-Anzeige (HDD) umfasst.

7. Verfahren nach Anspruch 1, wobei der Betriebszustandsparameter vertikale Luftfahrzeuggeschwindigkeit umfasst.

8. Verfahren nach Anspruch 1, wobei der Betriebszustandsparameter Luftfahrzeugschub umfasst.

9. Verfahren nach Anspruch 1, wobei der Betriebszustandsparameter Luftfahrzeuggleichgewichtslage umfasst.

10. Verfahren nach Anspruch 1, wobei der Betriebszustandsparameter Luftfahrzeugtreibstoffstand umfasst.

11. Verfahren nach Anspruch 1, wobei der Betriebszustandsparameter Luftfahrzeugflughöhe umfasst.

## Revendications

1. Procédé de réglage d'un indicateur d'échelle dynamique sur un affichage de vol d'un aéronef, comprenant :
la réception (602) d'un paramètre de statut opérationnel pour l'aéronef à partir d'une unité avionique qui se trouve à bord de l'aéronef ;
la génération (604) de l'indicateur d'échelle dynamique qui se trouve sur l'affichage de vol de l'aéronef, l'indicateur d'échelle dynamique comprenant une plage de valeurs qui représente des valeurs de paramètre de statut opérationnel supérieures à une valeur de définition sélectionnée, et une plage de valeurs qui représente des valeurs de paramètre de statut opérationnel inférieures à la valeur de définition sélectionnée ;
la transposition (606) du paramètre de statut opérationnel en une valeur qui est représentée sur l'indicateur d'échelle dynamique ;
**caractérisé en ce que** le procédé comprend en outre le réglage des plages de valeurs affichées sur l'indicateur d'échelle dynamique en :
réduisant (610) la plage de valeurs inférieures à la valeur de définition sélectionnée à partir de l'indicateur d'échelle dynamique lorsque la valeur de paramètre de statut opérationnel est supérieure à la valeur de définition sélectionnée,
réduisant (614) la plage de valeurs supérieures à la valeur de définition sélectionnée à partir de l'indicateur d'échelle dynamique lorsque la valeur de paramètre de statut opérationnel est inférieure à la valeur de définition sélectionnée et
en réduisant (618) la plage de valeurs à partir de l'indicateur d'échelle dynamique dans la mesure où la plage de valeurs dépasse la valeur de paramètre de statut opérationnel ; et
en affichant (620) l'indicateur d'échelle dynamique avec les plages de valeurs ajustées sur l'affichage.

2. Procédé selon la revendication 1, comprenant en outre :
la surveillance continue du paramètre de statut opérationnel afin de détecter tout changement de la valeur transposée représentée sur l'indicateur d'échelle dynamique ; et
l'ajustement dynamique des plages de valeurs affichées sur l'indicateur d'échelle dynamique afin de refléter les changements du paramètre de statut opérationnel.

3. Procédé selon la revendication 1, les plages de valeurs de l'indicateur d'échelle dynamique étant une échelle non linéaire.

4. Procédé selon la revendication 1, l'affichage comprenant un affichage de vol principal (PFD).

5. Procédé selon la revendication 1, l'affichage comprenant un affichage tête haute (HUD).

6. Procédé selon la revendication 1, l'affichage comprenant un affichage tête basse (HDD).

7. Procédé selon la revendication 1, le paramètre de statut opérationnel comprenant une vitesse verticale d'aéronef.

8. Procédé selon la revendication 1, le paramètre de statut opérationnel comprenant une poussée de l'aéronef.

9. Procédé selon la revendication 1, le paramètre de statut opérationnel comprenant une attitude de compensation de l'aéronef.

10. Procédé selon la revendication 1, le paramètre de statut opérationnel comprenant un niveau de carburant de l'aéronef.

11. Procédé selon la revendication 1, le paramètre de statut opérationnel comprenant une altitude de l'aéronef.
